# EUROPÄISCHE PATENTANMELDUNG

(11) **EP 2 942 551 A1**
(43) Veröffentlichungstag der Anmeldung: **11.11.2015**
(21) Anmeldenummer: 14305663.8
(22) Anmeldetag: 06.05.2014
(51) Int. Cl.: F16J 15/34, F16J 15/36

(54) **Dichtungsanordnung für ein drehbar gegenüber einem weiteren Bauteil gelagertes Bauteil und Verfahren**

(71) Anmelder: Aktiebolaget SKF, 415 50 Göteborg (SE); SKF Blohm + Voss Industries GmbH, 20457 Hamburg (DE)
(72) Erfinder: Baumann, Michael, Livingston, EH53 0SD (GB); Ehret, Pascal, 3404 WZ IJsselstein (NL); Mandou, Pascal, 01480 Jassans-Riottier (FR); Ziemen, Lars, Hamburg 22335 (DE)
(74) Vertreter: Kohl, Thomas

(57) **Zusammenfassung**

Eine Dichtungsanordnung (100) für ein drehbar gegenüber einem weiteren Bauteil gelagertes Bauteil umfasst einen Faltenbalg (10), ein feststehendes Dichtungselement (8) und ein zu dem feststehenden Dichtungselement (8) in gleitendem Kontakt gelagertes drehbares Dichtungselement (6). Dabei wird eine eine Dichtwirkung zwischen dem feststehenden Dichtungselement (8) und dem drehbaren Dichtungselement (6) verursachende Druckkraft durch den Faltenbalg (10) erzeugt.

## Beschreibung

Vorliegende Ausführungsbeispiele liegen auf dem Gebiet der Dichtungsanordnungen für ein drehbar gegenüber einem weiteren Bauteil gelagertes Bauteil.

In vielen Bereichen der Technik, insbesondere im Bereich der Wasserkraft, kommen Dichtungen zum Einsatz. Dabei können die Dichtungen einem starken Druck in Wassertiefen von mehreren 10 bis 100 Metern, und dementsprechend starken Umwelteinflüssen ausgesetzt sein. Solche Dichtungen können in einigen Fällen sehr aufwändig zu produzieren, und dementsprechend kostenintensiv sein, wodurch beispielsweise bei Unterwasserkraftwerken ein Verhältnis von Kosten zu Nutzen unnötig hoch ausfallen kann. Alternativ können konventionelle Lösungen zwar kostengünstiger ausfallen, aber dabei eine geringere Verschleißbeständigkeit und einen höheren Wartungsaufwand mit sich bringen. Als Folge dessen können Wartungsprozesse unter Umständen unnötig häufig anfallen, was bei Unterwasseranwendungen abseits des Festlandes zusätzlichen logistischen Aufwand verursachen, und mit einer Gefährdung von Personal oder Material durch Naturgewalten einhergehen kann.

Es ist daher wünschenswert, einen verbesserten Kompromiss aus Dichtwirkung, Fertigungsaufwand und Verschleißbeständigkeit bei einer Dichtungsanordnung zu bewirken.

Diesen Anforderungen tragen eine Dichtungsvorrichtung für ein drehbar gegenüber einem weiteren Bauteil gelagertes Bauteil und ein Verfahren zum Abdichten bei einem drehbar gegenüber einem weiteren Bauteil gelagerten Bauteil gemäß der unabhängigen Patentansprüche Rechnung.

Gemäß einem ersten Aspekt beziehen sich Ausführungsbeispiele auf eine Dichtungsanordnung für ein drehbar gegenüber einem weiteren Bauteil gelagertes Bauteil. Die Dichtungsanordnung umfasst einen Faltenbalg, ein feststehendes Dichtungselement und ein zu dem feststehenden Dichtungselement in gleitendem Kontakt gelagertes drehbares Dichtungselement. Dabei wird eine eine Dichtwirkung zwischen dem feststehenden Dichtungselement und dem drehbaren Dichtungselement verursachende Druckkraft durch den Faltenbalg erzeugt. Hierdurch könnten sich ein Fertigungsaufwand und damit verbundene Kosten reduzieren lassen. Auch könnten Wartungsprozesse seltener erforderlich sein, wodurch ein Betriebsaufwand und ein logistischer Aufwand verringert werden kann.

Bei einigen Ausführungsbeispielen weisen ein Material des feststehenden Dichtungselements und ein Material des drehbaren Dichtungselements unterschiedliche Härtegrade auf. Eine Dichtwirkung könnte hierbei erhöht werden. Auftretender Verschleiß könnte an einer vorbestimmten Komponente gezielt verringert werden, und somit besser kontrollierbar sein.

Bei einigen Ausführungsbeispielen ist der Faltenbalg vollständig aus Kunststoff gefertigt. Dabei kann eine Verwendung metallischer Bauteile wie z.B. Federn unter Umständen. entfallen. Ein Verschleißrisiko durch Korrosion kann so ggf. vermieden werden.

Bei manchen Ausführungsbeispielen weist der Faltenbalg eine in Richtung auf ein abzudichtendes Volumen weisende konvexe Wölbung auf. Dadurch kann es möglich sein, durch einen Druckunterschied zwischen einem auf der Primärseite des Faltenbalgs liegenden Medium und einem auf einer der Primärseite abgewandten Sekundärseite des Faltenbalgs liegenden Volumen eine zusätzliche Druckkraft über das feststehende Dichtungselement auf das drehbare Dichtungselement zu erzeugen. Hierdurch könnte eine Dichtwirkung weiter verbessert werden. Ferner könnte die Dichtwirkung hierdurch, abhängig von einem Druck des Mediums, wenigstens teilweise von einem selbstregulierenden Prozess abhängen.

Bei einigen Ausführungsbeispielen ist ein mittels des feststehenden Dichtungselements und des drehbaren Dichtungselements abgedichtetes Volumen an eine Druckkammer angebunden. Es könnte somit eine effektive Gesamtkraft auf die Dichtungsanordnung verringert, und dadurch Verschleiß vermieden werden. Ferner könnte auch überschüssiges Schmiermittel auf diese Weise abgeführt werden.

Bei manchen Ausführungsbeispielen umfasst ein Material des Faltenbalgs, des feststehenden Dichtungselements oder des drehbaren Dichtungselements Polyurethan. Dies könnte eine höhere Steifigkeit, bessere Dichtwirkung durch stärkeren Anpressdruck oder verbesserte Verschleißresistenz bewirken.

Bei einigen Ausführungsbeispielen wirkt die durch den Faltenbalg erzeugte Druckkraft parallel zu einer Drehachse des drehbaren Dichtungselements. Eine Angriffsrichtung der Druckkraft könnte somit individuell einem Verwendungszweck angepasst werden, und Bauraum unter Umständen effektiver nutzbar sein.

Bei manchen Ausführungsbeispielen umfasst das drehbare Dichtungselement oder das feststehende Dichtungselement wenigstens ein zumindest teilringförmiges Element. Ein Austausch, z.B. im Rahmen einer Erstmontage oder Wartung, kann dadurch erheblich reduziert werden.

Einige Ausführungsbeispiele beziehen sich ferner auf ein Strömungskraftwerk oder Gezeitenkraftwerk mit einer Dichtungsanordnung für ein drehbar gegenüber einem weiteren Bauteil gelagertes Bauteil. Empfindliche Elektronik, wie sie beispielsweise in Unterwasserkraftwerken eingesetzt wird, könnte so besser geschützt werden.

Gemäß einem weiteren Aspekt beziehen sich Ausführungsbeispiele auf ein Verfahren zum Abdichten bei einem drehbar gegenüber einem weiteren Bauteil gelagerten Bauteil. Das Verfahren umfasst ein Lagern eines feststehenden Dichtungselements zu einem drehbaren Dichtungselement in gleitendem Kontakt. Außerdem umfasst das Verfahren ein Erzeugen einer, eine Dichtwirkung zwischen dem feststehenden Dichtungselement und dem drehbaren Dichtungselement verursachenden, Druckkraft durch einen Faltenbalg. Eine Einsparung korrosionsanfälliger Materialien, eine höhere Verschleißbeständigkeit oder eine verbesserte Dichtwirkung könnte somit erfolgen.

Weitere vorteilhafte Ausgestaltungen werden nachfolgenden anhand von in den Zeichnungen dargestellten Ausführungsbeispielen, auf welche Ausführungsbeispiele jedoch nicht beschränkt sind, näher beschrieben. Es zeigen im Einzelnen:
Fig. 1 eine Querschnittsansicht einer Dichtungsanordnung gemäß einem einfachen Ausführungsbeispiel;
Fig. 2 eine Querschnittsansicht einer Dichtungsanordnung gemäß einem detailierten Ausführungsbeispiel;
Fig. 3 ein Flussdiagramm eines Verfahrens zum Abdichten bei einem drehbar gegenüber einem weiteren Bauteil gelagerten Bauteil gemäß einem Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

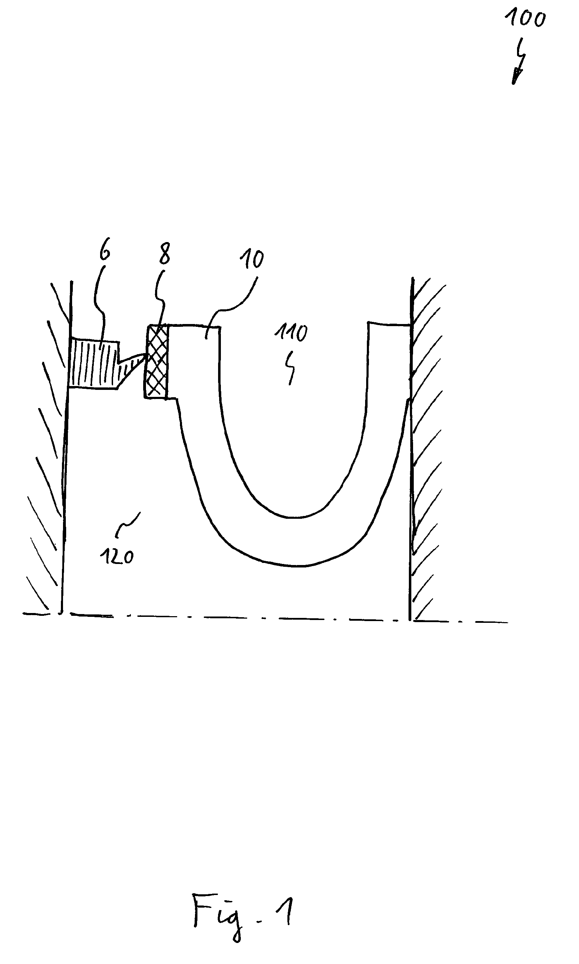

Fig. 1 zeigt ein einfaches Ausführungsbeispiel einer Dichtungsanordnung 100 für ein drehbar gegenüber einem weiteren Bauteil gelagertes Bauteil. Die Dichtungsanordnung 100 umfasst einen Faltenbalg 10. Außerdem umfasst die Dichtungsanordnung 100 ein feststehendes Dichtungselement 8 und ein zu dem feststehenden Dichtungselement in gleitendem Kontakt gelagertes drehbares Dichtungselement 6. Eine Druckkraft, welche eine Dichtwirkung zwischen dem feststehenden Dichtungselement 8 und dem drehbaren Dichtungselement 6 verursacht, wird dabei durch den Faltenbalg 10 hervorgerufen.

Eine Dichtwirkung oder ein Abdichten erfolgt gegenüber einem die Dichtungsanordnung 100 umgebenden Medium 110. Das Medium 110 kann Wasser, beispielsweise Süß- oder Salzwasser sein. Im Folgenden bezeichnen die Begriffe "primärseitig" oder "Primärseite" eine dem Medium 110 zugewandte Seite, und entsprechend "sekundärseitig" oder "Sekundärseite" eine dem Medium 110 abgewandte Seite. Anders ausgedrückt ist das Medium 110 auf der Primärseite, und ein abzudichtendes Volumen 120 auf der Sekundärseite angeordnet.

Das drehbar gelagerte Bauteil kann beispielsweise eine Turbine oder Welle umfassen, oder mit einer solchen in Verbindung stehen. Das weitere Bauteil kann feststehend sein, und z.B. ein Gehäuse umfassen. Das drehbar gelagerte Dichtungselement 6 oder das feststehende Dichtungselement 8 können eine Dichtlippe aufweisen. Die Dichtlippe kann eine Kontaktfläche zu dem jeweils anderen Dichtungselement bilden. Ein Material des feststehenden Dichtungselements 8 und ein Material des drehbaren Dichtungselements 6 können dabei unterschiedliche Härtegrade aufweisen. Z.B. kann ein Werkstoff des feststehenden Dichtungselements 8 Kautschuk und ein Werkstoff des drehbaren Dichtungselements 6 Polyurethan umfassen. Polyurethan (PU) kann dabei ein Kunststoff (wie z.B. ein Elastomer) oder Kunstharz sein, welches aus einer Polyadditionsreaktion von Dialkoholen (Diolen) oder Polyolen mit Polyisocyanaten herstellbar ist. Polyurethan kann dabei in seiner Molekularstruktur eine Urethan-Gruppe (-NH-CO-O-) aufweisen. Dabei kann eine an dem drehbaren Dichtungselement 6 befindliche Dichtlippe in das feststehende Dichtungselement 8 eindrücken. Bei einem anderen Ausführungsbeispiel ist das feststehende Dichtungselement 8 aus Polyurethan gefertigt, und das drehbare Dichtungselement 6 aus Kautschuk, beispielsweise hydriertem Acrylnitrilbutadien-Kautschuk (HNBR). Dabei kann das feststehende Dichtungselement 8 eine Dichtlippe aufweisen.

Das Material des feststehenden Dichtungselements 8 oder des drehbaren Dichtungselements 6 kann ferner auch ein polyurethanhaltiges Elastomer, wie z.B. Ecopur, umfassen. Eine Drehzahl der Dichtungselemente gegeneinander kann bei bis zu 20 oder 25 Umdrehungen pro Minute, oder auch mehr, liegen. Hierbei könnte eine Verwendung von Polyurethan im Vergleich zu herkömmlichen Werkstoffen eine höhere Beständigkeit gegenüber Abrieb, eine höhere Reißfestigkeit, eine höhere Steifigkeit oder auch ein verbessertes Dehnungsverhalten bewirken.

Das drehbare Dichtungselement 6 oder das feststehende Dichtungselement 8 können ferner Kompositwerkstoffe, nitrilbutadien-kautschukhaltige Werkstoffe (NBR) oder auch rostfreien Stahl aufweisen. Optional kann eine Beschichtung auf die Dichtungselemente aufgebracht sein, beispielsweise eine Chrom-Karbid-Beschichtung. Darüber hinaus können die Dichtungselemente in Form von O-Ringen ausgebildet, oder auch selbstschmierend sein, beispielsweise durch Verteilung von als Schmiermittel verwendetem Wasser während eines Betriebs.

Ein Material des Faltenbalgs 10 kann z.B. den Kunststoff Polyurethan umfassen. Hierdurch kann eine hohe Verschleißbeständigkeit, sowie eine verbesserte Steifigkeit erreicht werden. Ein Einsatz metallischer und damit möglicherweise korrosionsanfälliger Werkstoffe bei dem Faltenbalg 10 kann somit unter Umständen entfallen. Der Faltenbalg 10 in Fig. 1 steht unter Spannung, ist also in axialer Richtung gegenüber seinem Ruhezustand, z.B. um einen Faktor kleiner als 1/10, komprimiert. Hierdurch entsteht eine Druckkraft, welche durch eine höhere Steifigkeit weiter verbessert werden kann. Die Druckkraft sorgt für ein Anpressen des feststehenden Dichtungselements 8 auf das drehbare Dichtungselement 6, und verstärkt so deren dichtende Wirkung. Die axiale Richtung bezieht sich hierbei auf eine Drehachse des drehbaren Dichtungselements 6. Eine Druckkraft zwischen dem drehbaren Dichtungselement 6 und dem feststehenden Dichtungselement 8 kann z.B. 1-3 bar betragen.

Bei einem Ausführungsbeispiel ist der Faltenbalg 10 vollständig aus Kunststoff gefertigt. Eine Verwendung korrosionsanfälliger Materialien zum Ausüben einer die Dichtwirkung erzeugenden Druckkraft, z.B. einer Feder, könnte somit entfallen. Verschleißrisiken durch Korrosion und ein damit verbundenes Nachlassen der Dichtwirkung könnten somit vermieden werden.

Auf einer Sekundärseite der Dichtungsanordnung 100 befindet sich ein Volumen 120, welches gegenüber einem auf der Primärseite befindlichen Medium 110 abgedichtet ist. Der Faltenbalg 10 weist eine in Richtung auf das abzudichtende Volumen 120 weisende konvexe Wölbung auf. Somit kann durch einen Druckunterschied zwischen dem Medium 110 und dem Volumen 120 eine zusätzliche Druckkraft oder eine Druckverstärkung über das feststehende Dichtungselement 8 auf das drehbare Dichtungselement 6 erzeugt werden. Mit anderen Worten kann das Medium 110 eine der Kompression des Faltenbalgs 10 entgegen gerichtete Kraft erzeugen. Die Druckverstärkung durch das den Faltenbalg 10 wenigstens teilweise umgebende Medium 110 kann von einer Eintauchtiefe der Dichtungsanordnung 100 abhängen, und durch größere Tiefe entsprechend höher ausfallen. Dabei kann ein Druck des Mediums 110 z.B. bis zu 10 oder 15 bar, oder auch mehr, betragen. Die Dichtwirkung kann hierdurch zusätzlich verbessert werden. Außerdem könnte es dadurch ermöglicht werden, dass die Dichtwirkung bei einer Zunahme eines Druckes des Mediums 110 ebenfalls zunimmt. Mit anderen Worten findet bei einem Ausführungsbeispiel innerhalb vordefinierter Grenzwerte ein selbstregulierender Dichtungsprozess statt.

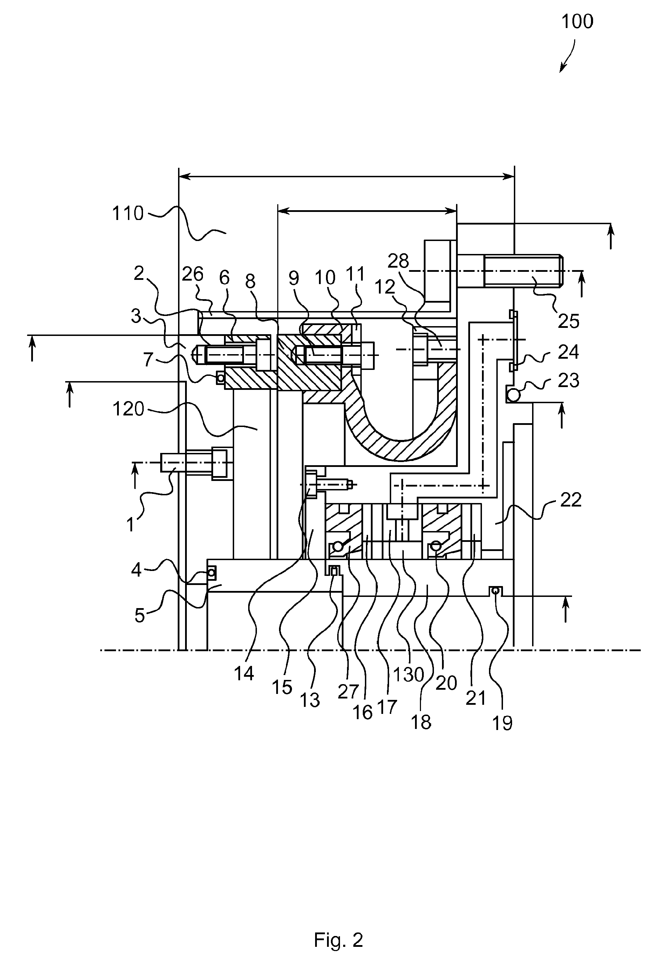

Fig. 2 zeigt eine Dichtungsanordnung 100 gemäß einem weiteren, detaillierten Ausführungsbeispiel. Gleiche oder vergleichbare Komponenten tragen hierin gleiche Bezugszeichen wie in Fig. 1, und sind im Folgenden nicht nochmals beschrieben. Vielmehr wird lediglich auf Unterschiede eingegangen. Beispielhaft ist in Fig. 2 das drehbare Bauteil 3 als Flansch, und das feststehende Bauteil 22 als Gehäuse dargestellt. Der Faltenbalg 10 ist über eine Schraube 28 an dem Gehäuse 22, und über eine Schraube 9 an dem feststehenden Dichtungselement 8 befestigt. Optional kann an der Schraube 9 eine Unterlegscheibe 11, und an der Schraube 28 eine Unterlegscheibe 12 angeordnet sein. Hierdurch könnte eine bessere Übertragung von Haltekräften der Schrauben 9; 11 an dem Faltenbalg 10 ermöglicht werden. Weiterhin ist das drehbare Dichtungselement 6 über eine Schraube 2, und optional über ein zusätzliches Verbindungsmittel 7, mit dem drehbaren Bauteil 3 verbunden. Darüber hinaus kann das drehbare Bauteil 3 eine Schraube 1 aufweisen, mittels derer ein weiteres Bauteil (z.B. eine Turbine) an dem drehbaren Bauteil 3 angebracht sein kann. Über ein Verbindungsmittel 4 ist das drehbare Bauteil 3 an einer Welle 5 angebunden.

Auf der das Medium 110 umfassenden Primärseite der Dichtungsanordnung 100 ist eine Abdeckung 26 mittels einer Schraube 25 an dem Gehäuse 22 angebracht. Die Abdeckung 26 erstreckt sich dabei in axiale Richtung. Durch die Abdeckung 26 können Verunreinigungen, beispielsweise durch gröbere Schmutzpartikel, insbesondere ein Eindringen derselben in das Volumen 120, zusätzlich vermieden werden.

Auf der Sekundärseite der Dichtungsanordnung 100 wird ein weiteres Volumen 130 mittels eines ersten federverstärkten Dichtringes 27 von dem Volumen 120 abgegrenzt. Ferner wird das weitere Volumen 130 durch einen zweiten federverstärkten Dichtring 20 begrenzt. Die federverstärkten Dichtringe 20; 27 sind hierbei mittels Distanzstücken 16; 21 gegen das Gehäuse 22 abgestützt. Zwischen dem Distanzstück 16 und dem zweiten federverstärkten Dichtring 20 ist weiterhin eine Einlassbohrung 17 angeordnet. Entsteht im Laufe eines Betriebs der Dichtungsanordnung 100 ein Verschleiß an den Dichtungselementen 6; 8, so kann das Medium 110 in das Volumen 120 eindringen. Die federverstärkten Dichtringe 20; 27 können hierbei einen zusätzlichen Schutz von sekundärseitig zu dem zweiten federverstärkten Dichtring 20 angeordneten Bauteilen oder ebendort befindlichen elektrischen Komponenten bewirken.

Die Welle 5 ist über ein Verbindungsmittel 13 mit einem Schaft 18 verbunden. Der Schaft 18 befindet sich in gleitendem Kontakt zu den federverstärkten Dichtringen 20; 27, und kann aus einem anderen Material als die Welle 5 gefertigt sein, oder eine Beschichtung aus einem anderen Material aufweisen. Die Beschichtung kann beispielsweise Polytetrafluorethylen (PTFE) umfassen. Verschleiß kann hierdurch möglicherweise vermindert werden. Tritt dennoch Verschleiß, beispielsweise an dem ersten federverstärkten Dichtring 27, auf, so kann das Medium 110 bis in das weitere Volumen 130 vordringen. Eine in dem Volumen 120 befindliche, mittels einer Schraube 14 an das Gehäuse 22 angebundene Abdeckung 15 kann hierbei wiederum ein Eindringen grober Schmutzpartikel verhindern oder zumindest reduzieren. Über die Einlassbohrung 17 kann das weitere Volumen 130 mit einem System zur Behebung einer Leckage (englisch: leakage recovery system) verbunden sein. Ein solches System kann beispielsweise dazu ausgebildet sein, z. B. mittels eines Feuchtigkeitssensors ein Eindringen von Feuchtigkeit zu detektieren, und durch Bereitstellen eines Signals einen Betreiber auf das Vorhandensein einer Leckage hinzuweisen. Verschleiß an der Dichtungsanordnung 100 kann somit erkannt, und ein Wartungsprozess vorbereitet und durchgeführt werden. Ferner kann das System dazu ausgebildet sein, z. B. mittels einer Pumpanordnung, das in das weitere Volumen 130 vorgedrungene Medium 110 wenigstens teilweise abzupumpen. Dies könnte unter Umständen sogar bei aufgetretenem Verschleiß und Eindringen von Feuchtigkeit einen möglichen Schaden an feuchtigkeitsempfindlichen Komponenten vermindern.

Die in Fig. 2 gezeigten Schrauben 1, 2; 9; 14; 25; 28 sowie die Verbindungsmittel 4; 7; 13; 19; 23; 24 sind lediglich beispielhaft als solche zu verstehen. Grundsätzlich können statt diesen auch andere Befestigungsmittel für eine Verbindung von Komponenten verwendet werden. Die Verbindung kann dabei kraft-, stoff- oder formschlüssig sein. Befestigungsmittel können demnach z.B. auch Bolzen, Nuten, Schweißnähte, Steckverbindungen, Klebstoffe oder Nieten umfassen. Ein Befestigungsmittel (z.B. Schraube oder ein anderes Verbindungsmittel) kann zum Verbinden mehrerer vorbestimmter Komponenten mehrmals vorhanden sein. Mehrere gleiche Befestigungsmittel können z.B. in gleichen Winkelabständen zueinander entlang eines Kreisverlaufs um die Rotationsachse herum angeordnet sein.

Bei einem weiteren Ausführungsbeispiel umfasst das drehbare oder feststehende Dichtungselement 6; 8 wenigstens ein teilringförmiges Element. Beispielsweise kann das Dichtungselement 6; 8 aus zwei Elementen, welche einem Kreisbogen von jeweils 180° folgen, oder drei Elementen, welche einem Kreisbogen von jeweils 120° folgen, zusammensetzbar sein. Die umfassten Elemente können ferner auch unterschiedlich groß sein, und lediglich in Summe einem Kreisverlauf von 360° folgen. Die Dichtungselemente können dabei in Ausführungsbeispielen Kreisradien von bis zu 600 mm oder 800 mm, oder auch größer als 800 mm aufweisen.

Bei einem noch weiteren Ausführungsbeispiel ist das mittels des feststehenden Dichtungselements 8 und des drehbaren Dichtungselements 6 abgedichtete Volumen 120 an eine Druckkammer angebunden. Hierdurch kann ein Druckunterschied, und damit eine durch das Medium 110 auf die Dichtungselemente 6; 8 wirkende Kraft, reduziert werden, wodurch sich ein Verschleiß verringern kann. Auch kann es dadurch möglich sein, überschüssiges Schmiermittel aus dem Volumen 120 abzuführen.

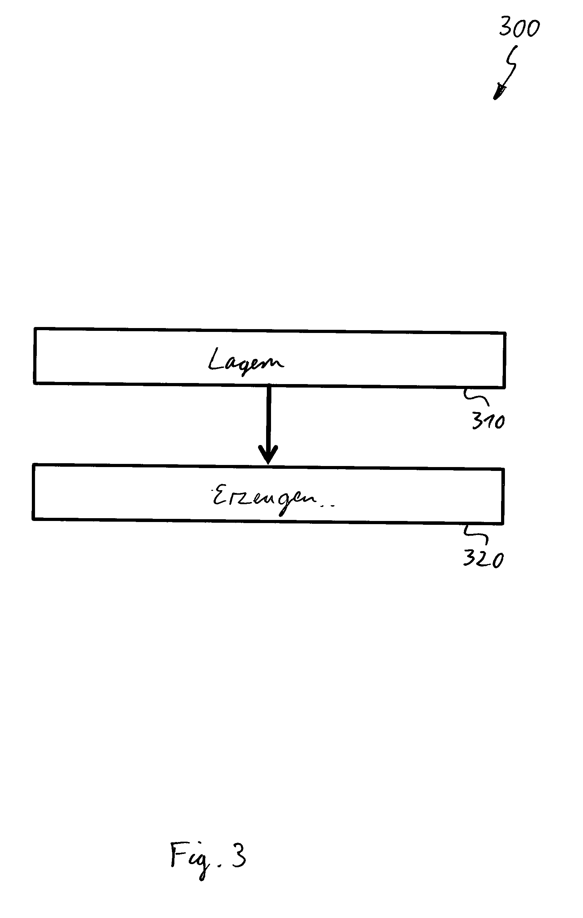

Fig. 3 zeigt ein Flussdiagramm eines Verfahrens 300 zum Abdichten bei einem drehbar gegenüber einem weiteren Bauteil gelagerten Bauteil gemäß einem Ausführungsbeispiel. Das Verfahren 300 umfasst ein Lagern 310 eines feststehenden Dichtungselements zu einem drehbaren Dichtungselement in gleitendem Kontakt. Außerdem umfasst das Verfahren 300 ein Erzeugen 320 einer, eine Dichtwirkung zwischen dem feststehenden Dichtungselement und dem drehbaren Dichtungselement verursachenden, Druckkraft durch einen Faltenbalg.

Ausführungsbeispiele können einen Einsatz in größeren Tauchtiefen verglichen mit herkömmlichen Lösungen erlauben. Durch eine Verwendung von Polyurethan bei dem Faltenbalg, dem feststehenden oder dem drehbaren Dichtungselement kann eine höhere Steifigkeit im Vergleich zu herkömmlichen Elastomeren erreicht werden, wodurch die Dichtungsanordnung einem größeren Umgebungsdruck, beispielsweise mindestens 2, 5 oder 15 bar, eine dichtende Wirkung beibehalten kann.

Einige der genannten Ausführungsbeispiele können bei Unterwasserkraftwerken, z.B. bei Strömungs- oder Gezeitenkraftwerken, eingesetzt werden. Es kann durch manche Ausführungsbeispiele möglich sein, einen Wartungsprozess zu vereinfachen, oder bei einem Abdichten eine Redundanz zu schaffen, wodurch eine mögliche Beschädigung verzögert oder verhindert werden kann. Ferner können unter Umständen Bauraum oder Produktionskosten eingespart werden. Zusätzliche Risiken, z.B. durch Korrosion metallischer Bauteile können durch eine Verwendung von Kunststoff vermieden werden. Anders ausgedrückt kann es möglich sein, eine höhere Verlässlichkeit oder Belastbarkeit der Dichtungsanordnung zu erreichen. Somit könnten durch Ausführungsbeispiele Wartungsprozesse vereinfacht oder beschleunigt werden, sowie eine Lebensdauer oder Kosteneffizienz verbessert werden.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichenliste

- 1: Schraube
- 2: Schraube
- 3: Drehbares Bauteil
- 4: Verbindungsmittel
- 5: Welle
- 6: Drehbares Dichtungselement
- 7: Verbindungsmittel
- 8: Feststehendes Dichtungselement
- 9: Schraube
- 10: Faltenbalg aus Kunststoff
- 11: Unterlegscheibe
- 12: Unterlegscheibe
- 13: Verbindungsmittel
- 14: Schraube
- 15: Abdeckung
- 16: Distanzstück
- 17: Einlassbohrung
- 18: Schaft
- 19: Verbindungsmittel
- 20: Zweiter federverstärkter Dichtring
- 21: Distanzstück
- 22: Feststehendes Bauteil
- 23: Verbindungsmittel
- 24: Verbindungsmittel
- 25: Schraube
- 26: Abdeckung
- 27: Erster federverstärkter Dichtring
- 28: Schraube
- 100: Dichtungsanordnung
- 110: Medium
- 120: Volumen
- 130: Weiteres Volumen
- 300: Verfahren
- 310: Lagern
- 320: Erzeugen

## Patentansprüche

1. Dichtungsanordnung (100) für ein drehbar gegenüber einem weiteren Bauteil gelagertes Bauteil, umfassend einen Faltenbalg (10), ein feststehendes Dichtungselement (8) und ein zu dem feststehenden Dichtungselement (8) in gleitendem Kontakt gelagertes drehbares Dichtungselement (6), wobei eine eine Dichtwirkung zwischen dem feststehenden Dichtungselement (8) und dem drehbaren Dichtungselement (6) verursachende Druckkraft durch den Faltenbalg (10) erzeugt wird.

2. Dichtungsanordnung (100) gemäß Anspruch 1, wobei ein Material des feststehenden Dichtungselements (8) und ein Material des drehbaren Dichtungselements (6) unterschiedliche Härtegrade aufweisen.

3. Dichtungsanordnung (100) gemäß einem der vorangegangenen Ansprüche, wobei der Faltenbalg (10) vollständig aus Kunststoff gefertigt ist.

4. Dichtungsanordnung (100) gemäß einem der vorangegangenen Ansprüche, wobei der Faltenbalg (10) eine in Richtung auf ein abzudichtendes Volumen (120) weisende konvexe Wölbung aufweist.

5. Dichtungsanordnung (100) gemäß einem der vorangegangenen Ansprüche, wobei ein mittels des feststehenden Dichtungselements (8) und des drehbaren Dichtungselements (6) abgedichtetes Volumen (120) an eine Druckkammer angebunden ist.

6. Dichtungsanordnung (100) gemäß einem der vorangegangenen Ansprüche, wobei ein Material des Faltenbalgs (10), des feststehenden Dichtungselements (8) oder des drehbaren Dichtungselements (6) Polyurethan umfasst.

7. Dichtungsanordnung (100) gemäß einem der vorangegangenen Ansprüche, wobei die durch den Faltenbalg (10) erzeugte Druckkraft parallel zu einer Drehachse des drehbaren Dichtungselements (6) wirkt.

8. Dichtungsanordnung (100) gemäß einem der vorangegangenen Ansprüche, wobei das drehbare Dichtungselement (6) oder das feststehende Dichtungselement (8) wenigstens ein zumindest teilringförmiges Element umfasst.

9. Strömungskraftwerk oder Gezeitenkraftwerk mit einer Dichtungsanordnung (100) gemäß einem der vorangegangenen Ansprüche.

10. Verfahren (300) zum Abdichten bei einem drehbar gegenüber einem weiteren Bauteil gelagerten Bauteil, mit:
Lagern (310) eines feststehenden Dichtungselements zu einem drehbaren Dichtungselement in gleitendem Kontakt; und
Erzeugen (320) einer, eine Dichtwirkung zwischen dem feststehenden Dichtungselement und dem drehbaren Dichtungselement verursachenden, Druckkraft durch einen Faltenbalg.
